# EUROPEAN PATENT APPLICATION

(11) **EP 3 696 933 A1**
(43) Date of publication of application: **19.08.2020**
(21) Application number: 19157464.9
(22) Date of filing: 15.02.2019
(51) Int. Cl.: H02J 3/12, H02J 3/38, G05F 1/14, H02J 3/18

(54) **ARRANGEMENT COMPRISING A VOLTAGE DISTRIBUTION LINE AND ELECTRICAL CONSUMERS**

(71) Applicant: ABB Power Grids Switzerland AG, 5400 Baden (CH)
(72) Inventor: Cornelius, Frank, 59929 Brilon (DE); Asshauer, Tobias, 34431 Marsberg (DE)
(74) Representative: Vossius & Partner Patentanwälte Rechtsanwälte mbB

(57) **Abstract**

An arrangement, comprising an energy generator (1), at least one energy consumer (2) and optional at least one renewable energy source (3), wherein a voltage distribution line (4) runs from the energy generator (1) to the energy consumer (2) and wherein the renewable energy source (3) may feed or add additional volt-age to the voltage distribution line (4), characterized in that a transformer substation (5) at a predefined location (13) comprises a line voltage regulator (6), which simultaneously controls the voltage of the voltage distribution line (4) at said location (13) of the transformer substation (5) and also supplies at least one electricity consumer (7) with an appropriate voltage, achieves the object to regulate voltage levels in a space- and cost-saving manner, especially without building up a new transformer substation.

## Description

The invention is related to an arrangement, comprising an energy generator, at least one energy consumer and optional at least one renewable energy source, wherein a voltage distribution line runs from the energy generator to the energy consumer and wherein the renewable energy source may feed or add additional voltage to the voltage distribution line.

The energy generator usually is a conventional power plant and the energy consumer may be a plant or bigger facility or a bigger institution, which needs medium voltage for its operation. The renewable energy source additionally may feed voltage to the voltage distribution line especially depending on weather conditions. Often decentral renewable energy sources are used.

Due to these decentral renewable energy sources and/ or due to electrical resistances a voltage level can fluctuate significantly time dependently or dependently on a location along the extension of the voltage distribution line. Therefore, there is a need for regulating a voltage in that way that the voltage is kept within a limited range or within an interval at a special location of the distribution line. Based on this fact EP 2 942 796 B1 discloses a line voltage regulator.

But there is the technical problem that installing a new line voltage regulating unit at a random or arbitrary location requires the installing of a complete transformer substation. The costs for this installation are high. Further, a terrain or real estate for the installation has to be found. An additional or new transformer substation also needs maintenance and increases the costs for maintenance for the chain of transformer substations along the extension of the voltage distribution line.

The object of the invention therefore is to regulate voltage levels in a space- and cost-saving manner, especially without building up a new transformer substation.

The object of the invention is achieved by means of the features of claim 1.

According to this claim a transformer substation at a predefined location comprises a line voltage regulator, which simultaneously controls the voltage of the voltage distribution line at said location of the transformer substation and also supplies at least one electricity consumer with an appropriate voltage.

According to the invention it has been found that a medium voltage distribution line usually is connected to a number of already existing or older transformer substations along an extension of the voltage distribution line. The transformer substations transform electrical energy from a medium voltage level to a low voltage level. Further it has been found that lots of electricity consumers usually need the low voltage level.

Also, it has been found that many problems can be solved by combining the functionalities of a conventional, especially already existing, substation transformer with the functionalities of a line voltage regulator. This gives the opportunity to install a line voltage regulator at transformer substations and to retrofit the transformer substations, especially in a medium voltage network. Costs for installation can be significantly reduced. The line voltage regulator, especially to retrofit, fulfils two functions. First function is the regulation of a voltage. The second function is the power supply. The voltage level at the connected medium voltage distribution line with all subsequent connected substations will be regulated.

Advantageously, the electricity consumer, especially a house or an apartment house, receives low voltage, wherein low voltage is in the range of 50 V to 400 V. Through this, private houses may be supplied by a low voltage using the line voltage regulator, which retrofits the existing transformer substation.

Further advantageously, the line voltage regulator controls medium voltage in the voltage distribution line, wherein medium voltage is in the range of 50 V to 36 kV. Through this, the voltage level in the medium voltage distribution line is hold in a preferred interval.

Advantageously, the line voltage regulator comprises a booster transformer and a feeder transformer, wherein the booster transformer adds an additional voltage to the voltage distribution line depending of a drop of voltage in the voltage distribution line and wherein the feeder transformer is electrically connected with the booster transformer via a tap changer and/ or an electrical circuit. Through this, the line voltage regulator to retrofit is designed as a conventional line voltage regulator comprising two active parts. These active parts are a booster transformer and a feeder transformer. The tappings of the feeder transformer are connected to a tap changer, preferably to an on-load tap changer, to regulate the voltage level in the voltage distribution line.

Further advantageously, the booster transformer comprises a first coil winding and a second coil winding, wherein the first coil winding induces the additional voltage in the second coil winding and/ or wherein the second coil winding is connected in series with the voltage distribution line using connector means. Through this, an additional voltage may be added by the first coil winding of the booster transformer to the voltage distribution line to hold the voltage level within a defined range. The connector means allow an easy installation of the booster transformer into the voltage distribution line.

Advantageously the first coil winding of the feeder transformer is electrically connected with the voltage distribution line and induces a voltage in the second coil winding of the feeder transformer, wherein the second coil winding of the feeder transformer is electrically connected with the first coil winding of the booster transformer via a tap changer and/ or an electrical circuit. Through this, the voltage level in the voltage distribution line may be regulated dependently of a change of the voltage level in the voltage distribution line.

Further advantageously, the electricity consumer is supplied by the feeder transformer with voltage, especially with low voltage. The second coil winding of the feeder transformer may be used to supply a house or an apartment house with low voltage. The low voltage also may be hold in a defined range using the line voltage regulator. Advantageously, the renewable energy source comprises a generator using wind energy and/ or a generator using solar energy. These types of energy may be used in a decentral manner.

Further advantageously, the transformer substation is retrofitted by the line voltage regulator. Through this, older or already existing transformer substations may be retrofitted with conventional line voltage regulators.

Advantageously, a power grid comprises at least one arrangement described here and/ or comprises several transformer substations arranged in series along the voltage distribution line. Through this, a huge area can be retrofitted by conventional line voltage regulators.

In the drawing:

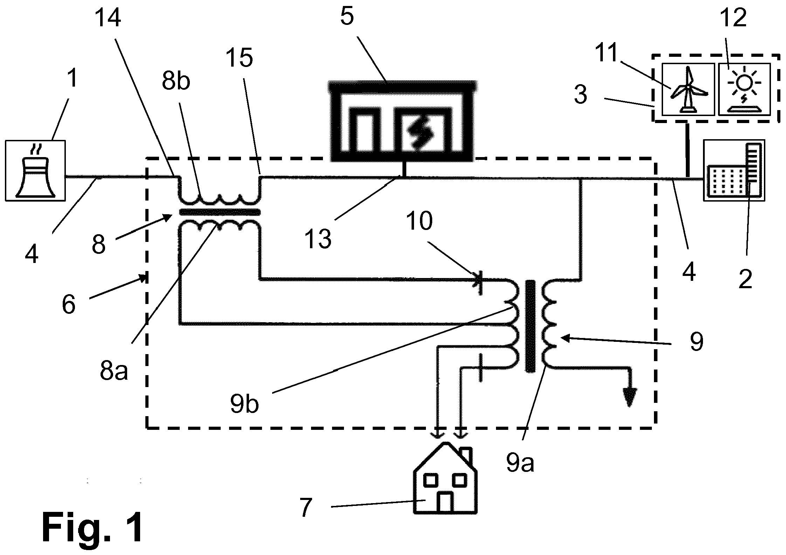

- Fig. 1: schematically shows a line voltage regulator comprising a booster transformer and a feeder transformer, which is installed as a retrofit part in an already existing transformer substation.

Fig. 1 shows an arrangement, comprising an energy generator 1, at least one energy consumer 2 and at least one renewable energy source 3, wherein a voltage distribution line 4 runs or extends from the energy generator 1 to the energy consumer 2. The renewable energy source 3 may feed or add additional voltage to the voltage distribution line 4. The energy generator 1 is developed as a conventional power plant and the energy consumer 2 is developed as a plant, bigger facility or a bigger institution, needing lots of power.

The transformer substation 5 at a predefined location 13 comprises a line voltage regulator 6, which simultaneously controls the voltage of the voltage distribution line 4 at said location 13 of the transformer substation 5 and also simultaneously supplies at least one electricity consumer 7, namely at least one house or apartment house, with an appropriate voltage.

The electricity consumer 7 receives a low voltage, namely a voltage of 110 V, 220 V or 380 V. The low voltage is alternating voltage (A.C voltage).

The line voltage regulator 6 controls medium voltage in the voltage distribution line 4, wherein medium voltage is in the range of 50 V to 36 kV. The medium voltage is alternating voltage (A.C voltage).

The line voltage regulator 6 comprises a booster transformer 8 and a feeder transformer 9. The booster transformer 8 adds an additional voltage to the voltage distribution line 4 depending of a drop of voltage in the voltage distribution line 4. The feeder transformer 9 is electrically connected with the booster transformer 8 via a tap changer 10.

The booster transformer 8 comprises a first coil winding 8a and a second coil winding 8b, wherein the first coil winding 8a induces the additional voltage in the second coil winding 8b. The second coil winding 8b is connected in series with the voltage distribution line 4 using connector means 14, 15.

The first coil winding 9a of the feeder transformer 9 is electrically connected with the voltage distribution line 4 and induces a voltage in the second coil winding 9b of the feeder transformer 9. The second coil winding 9b of the feeder transformer 9 is electrically connected with the first coil winding 8a of the booster transformer 8 via the tap changer 10 and/ or a circuit.

The tappings of the feeder transformer 9 are connected to the tap changer 10, which is an on load tap changer, to regulate the voltage level in the voltage distribution line 4. One extra tapping at e.g. 400 V is connected to a line voltage terminal. This tapping and the transformer winding, where it is connected, are designed to transfer the needed line voltage power, which is e.g. 400 kVA or 630 KVA.

The tap changer 10 works fully automatic to regulate the voltage level in the voltage distribution line 4.

The electricity consumer 7 is supplied by the feeder transformer 9 with voltage. The second coil winding 9b of the feeder transformer 9 supplies the electricity consumer 7 with low voltage.

The renewable energy source 3 comprises a generator using wind energy 11 and/ or a generator using solar energy 12.

The transformer substation 5 is retrofitted by a conventional line voltage regulator 6.

A power grid, comprises at least one arrangement as described above and several transformer substations 5 are arranged in series along the voltage distribution line 4.

**Reference numbers**

| | |
|---|---|
| 1 | Energy generator |
| 2 | Energy consumer |
| 3 | Renewable energy source |
| 4 | Voltage distribution line |
| 5 | Transformer substation |
| 6 | Line voltage regulator |
| 7 | Electricity consumer |
| 8 | Booster transformer |
| 8a | First coil winding of 8 |
| 8b | Second coil winding of 8 |
| 9 | Feeder transformer |
| 9a | First coil winding of 9 |
| 9b | Second coil winding of 8 |
| 10 | Tap changer |
| 11 | Generator using wind energy |
| 12 | Generator using solar energy |
| 13 | Predefined location of 5 |
| 14 | Connection means |
| 15 | Connection means |

## Claims

1. Arrangement, comprising an energy generator (1), at least one energy consumer (2) and optional at least one renewable energy source (3) wherein a voltage distribution line (4) runs from the energy generator (1) to the energy consumer (2) and wherein the renewable energy source (3) may feed or add additional voltage to the voltage distribution line (4),
**characterized in that** a transformer substation (5) at a predefined location (13) comprises a line voltage regulator (6), which simultaneously controls the voltage of the voltage distribution line (4) at said location (13) of the transformer substation (5) and also supplies at least one electricity consumer (7) with an appropriate voltage.

2. Arrangement according to claim 1, **characterized in that** the electricity consumer (7) receives low voltage, wherein low voltage is in the range of 50 V to 300 V.

3. Arrangement according to claim 1 or 2, **characterized in that** the line voltage regulator (6) controls medium voltage in the voltage distribution line (4), wherein medium voltage is in the range of 50 V to 36 kV.

4. Arrangement according to one of the preceding claims, **characterized in that** the line voltage regulator (6) comprises a booster transformer (8) and a feeder transformer (9), wherein the booster transformer (8) adds an additional voltage to the voltage distribution line (4) depending of a drop of voltage in the voltage distribution line (4) and wherein the feeder transformer (9) is electrically connected with the booster transformer (8) via a tap changer (10) and/ or an electrical circuit.

5. Arrangement according to claim 4, **characterized in that** the booster transformer (8) comprises a first coil winding (8a) and a second coil winding (8b), wherein the first coil winding (8a) induces the additional voltage in the second coil winding (8b) and/ or wherein the second coil winding (8b) is connected in series with the voltage distribution line (4) using connector means (14, 15).

6. Arrangement according to claim 5, **characterized in that** the first coil winding (9a) of the feeder transformer (9) is electrically connected with the voltage distribution line (4) and induces a voltage in the second coil winding (9b) of the feeder transformer (9), wherein the second coil winding (9b) of the feeder transformer (9) is electrically connected with the first coil winding (8a) of the booster transformer (8) via a tap changer (10) and/ or an electrical circuit.

7. Arrangement according to one of the claims 4 to 6, **characterized in that** the electricity consumer (7) is supplied by the feeder transformer (9) with voltage.

8. Arrangement according to one of the preceding claims, **characterized in that** the renewable energy source (3) comprises a generator using wind energy (11) and/ or a generator using solar energy (12).

9. Arrangement according to one of the preceding claims, **characterized in that** the transformer substation (5) is retrofitted by the line voltage regulator (6).

10. Power grid, comprising at least one arrangement according to one of the preceding claims and/ or several transformer substations (5) arranged in series along the voltage distribution line (4).
